(19) Europäisches Patentamt
European Patent Office
Office européen des brevets

(11) **EP 3 869 171 A1**

(12) **EUROPEAN PATENT APPLICATION**
published in accordance with Art. 153(4) EPC

(43) Date of publication:
**25.08.2021 Bulletin 2021/34**

(51) Int Cl.:
***G01J 5/60*** *(2006.01)*

(21) Application number: **19873929.4**

(22) Date of filing: **15.10.2019**

(86) International application number:
**PCT/JP2019/040515**

(87) International publication number:
**WO 2020/080368 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2018 JP 2018195131**

(71) Applicant: **FURUKAWA ELECTRIC CO., LTD.**
**Chiyoda-ku**
**Tokyo 100-8322 (JP)**

(72) Inventor: **IWAMA, Masaki**
**Tokyo 100-8322 (JP)**

(74) Representative: **SSM Sandmair**
**Patentanwälte Rechtsanwalt**
**Partnerschaft mbB**
**Joseph-Wild-Straße 20**
**81829 München (DE)**

(54) **TEMPERATURE MEASURING SYSTEM, TEMPERATURE MEASURING METHOD, AND LASER PROCESSING DEVICE**

(57) A temperature measurement system includes: a first light receiving unit that receives a first optical component having a first wavelength in light emitted by a measuring target object radiating heat; a second light receiving unit that receives a second optical component having a second wavelength longer than the first wavelength in the light; a third light receiving unit that receives a third optical component having a third wavelength shorter than the first wavelength or longer than the second wavelength in the light; and a processing unit that corrects an intensity of the first optical component received by the first light receiving unit and an intensity of the second optical component received by the second light receiving unit on a basis of an intensity of the third optical component received by the third light receiving unit and calculates a temperature of the measuring target object on a basis of the corrected intensity of the first optical component and the corrected intensity of the second optical component by using a two-color method.

FIG.1

**Description**

Field

The present invention relates to a temperature measurement system, a temperature measurement method, and a laser processing device.

Background

A two-color method is known as a method for measuring a temperature. The two-color method measures the intensities of thermal radiant light at two wavelengths by utilizing the fact that the shape of a thermal radiant light spectrum from a measuring target object depends only on the temperature of the measuring target object and calculates the temperature from the wavelength difference and the intensity difference therebetween (see Patent Literatures 1 and 2).

Citation List

Patent Literature

Patent Literature 1: Japanese Patent No. 1638473
Patent Literature 2: Japanese Laid-open Patent Publication No. 2007-192579

Summary

Technical Problem

However, in a case where the two-color method is used, there is a problem that the accuracy of temperature measurement is reduced when the light emitted by the measuring target object being in thermal radiation contains the optical component emitted by phenomena other than the thermal radiation.

For example, in a case where laser processing is performed by irradiating a processing target object made of a metal material with a laser beam, the metal material melts at a high temperature and emits thermal radiant light. Further, plumes are generated from the molten metal material. A plume is plasma of metal vapor. This plume emits light. As a result, in the processing target object which is the measuring target object, the plume emits light together with thermal radiant light. Such emission of plume is an example of the light which the measuring target object emits due to phenomena other than thermal radiation. Other light emitted due to phenomena other than thermal radiation includes fluorescence, laser scattered light, and light emission due to combustion. Since the light is an error factor of temperature in the temperature measurement using the two-color method, the light is described as error factor light as appropriate below.

The present invention has been made in view of the above, and an object of the present invention is to provide a temperature measurement system, a temperature measurement method, and a laser processing device using them which can suppress a decrease in the accuracy of temperature measurement using a two-color method.

Solution to Problem

To resolve the above problem and attain the object, a temperature measurement system according to an embodiment of the present invention includes: a first light receiving unit that receives a first optical component having a first wavelength in light emitted by a measuring target object radiating heat; a second light receiving unit that receives a second optical component having a second wavelength longer than the first wavelength in the light; a third light receiving unit that receives a third optical component having a third wavelength shorter than the first wavelength or longer than the second wavelength in the light; and a processing unit that corrects an intensity of the first optical component received by the first light receiving unit and an intensity of the second optical component received by the second light receiving unit on a basis of an intensity of the third optical component received by the third light receiving unit and calculates a temperature of the measuring target object on a basis of the corrected intensity of the first optical component and the corrected intensity of the second optical component by using a two-color method.

In the temperature measurement system according to an embodiment of the present invention, the first wavelength, the second wavelength, and the third wavelength are in a range of 300 nm to 1000 nm.

In the temperature measurement system according to an embodiment of the present invention, the first light receiving unit, the second light receiving unit, and the third light receiving unit are configured by different pixel regions of a single image sensor.

In the temperature measurement system according to an embodiment of the present invention, the first light receiving unit and the second light receiving unit are configured by different pixel regions of a single image sensor, and the third light receiving unit is configured by a light receiving element separate from the image sensor.

In the temperature measurement system according to an embodiment of the present invention, the third wavelength is a wavelength shorter than the first wavelength by 50 nm or more.

In the temperature measurement system according to an embodiment of the present invention, the third wavelength is a wavelength longer than the second wavelength by 50 nm or more.

In the temperature measurement system according to an embodiment of the present invention, the processing unit obtains intensities of an error factor optical component emitted due to phenomena other than thermal radiation in the light at the first wavelength and the second wavelength from the intensity of the third optical component received by the third light receiving unit and performs the correction by subtracting the intensities from the intensity of the received first optical component and the intensity of the received second optical component, respectively.

In the temperature measurement system according to an embodiment of the present invention, the measuring target object contains copper or a copper alloy.

In the temperature measurement system according to an embodiment of the present invention, the third wavelength is in a range of 500 nm to 550 nm.

In the temperature measurement system according to an embodiment of the present invention, the third wavelength is 511 nm $\pm$ 2 nm, 516 nm $\pm$ 2 nm, or 522.5 nm $\pm$ 2 nm.

In the temperature measurement system according to an embodiment of the present invention, the measuring target object contains aluminum or an aluminum alloy.

In the temperature measurement system according to an embodiment of the present invention, the measuring target object radiates heat by being irradiated with a laser beam.

A laser processing device according to an embodiment of the present invention includes: the temperature measurement system; and a laser device that outputs a laser beam to irradiate the measuring target object.

A temperature measurement method according to an embodiment of the present invention includes: receiving a first optical component having a first wavelength in light emitted by a measuring target object radiating heat; receiving a second optical component having a second wavelength longer than the first wavelength in the light; receiving a third optical component having a third wavelength shorter than the first wavelength or longer than the second wavelength in the light; and correcting an intensity of the received first optical component and an intensity of the received second optical component on a basis of an intensity of the received third optical component and calculating a temperature of the measuring target object on a basis of the corrected intensity of the first optical component and the corrected intensity of the second optical component by using a two-color method.

In the temperature measurement method according to an embodiment of the present invention, intensities of an error factor optical component emitted due to phenomena other than thermal radiation in the light at the first wavelength and the second wavelength are obtained from the intensity of the received third optical component, and the correction is performed by subtracting the intensities from the intensity of the received first optical component and the intensity of the received second optical component, respectively.

Advantageous Effects of Invention

According to the present invention, there is an effect that the decrease in the accuracy of temperature measurement using the two-color method can be suppressed. Brief Description of Drawings

FIG. 1 is a schematic diagram illustrating a schematic configuration of a temperature measurement system according to a first embodiment.
FIG. 2 is a diagram illustrating a measuring target object.
FIG. 3 is a diagram illustrating an intensity spectrum of light emitted by the measuring target object.
FIG. 4 is a diagram illustrating an example of a correction method.
FIG. 5 is a schematic diagram illustrating a schematic configuration of a temperature measurement system according to a second embodiment.
FIG. 6 is a schematic diagram illustrating a schematic configuration of a temperature measurement system according to a third embodiment.
FIG. 7 is a schematic diagram illustrating a schematic configuration of a laser processing device according to a fourth embodiment.
FIG. 8 is a diagram illustrating an example of an intensity spectrum of emission of plume.

Description of Embodiments

Hereinafter, embodiments of the present invention will be described in detail with reference to the accompanying drawings. Incidentally, the present invention is not limited to the embodiments described below.
Further, in the description of the drawings, the same or corresponding elements are appropriately designated by the same reference numerals, and duplicate description will be omitted as appropriate.

(First embodiment)

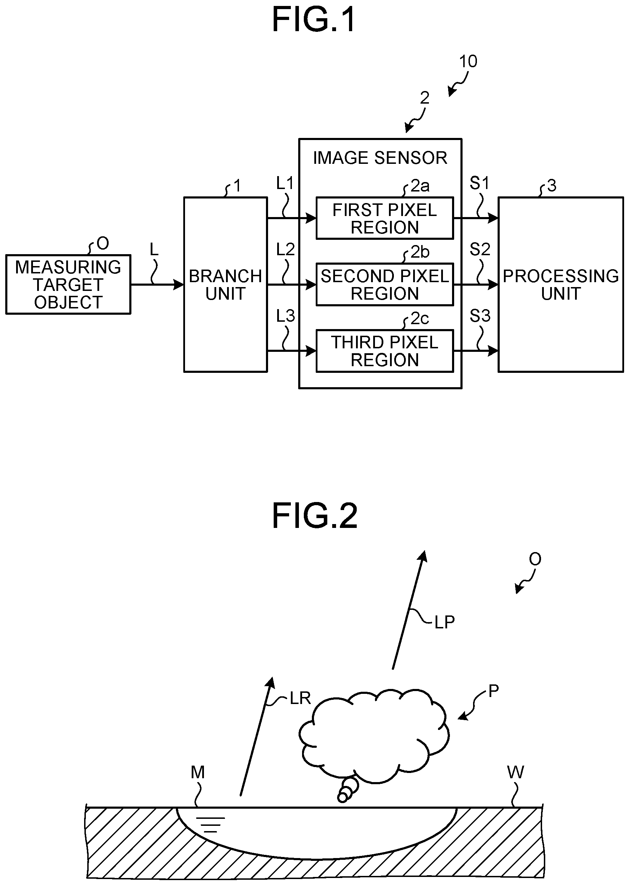

FIG. 1 is a schematic diagram illustrating a schematic configuration of a temperature measurement system according to a first embodiment. A temperature measurement system 10 includes a branch unit 1, an image sensor 2, and a processing unit 3. FIG. 1 illustrates the case of measuring the temperature of a measuring target object O.

FIG. 2 is a diagram illustrating a measuring target object. The measuring target object O is a workpiece W which is a processing target object made of a metal material and is laser-processed. In this embodiment, the workpiece W is made of copper or a copper alloy. Further, examples of laser processing include cutting, welding, and three-dimensional modeling. In laser processing, a part of the workpiece W is irradiated with a laser beam and melted to form a molten pool M. The molten pool M of the measuring target object O emits thermal radiation and emits thermal radiant light LR. Further, a plume P which is plasma generated by a laser beam is generated from the molten pool M. The plume P emits light LP which is emitted by a plume (plasma). The light LP emitted from the plume P is also emitted by the measuring target object O.

Returning to FIG. 1, the branch unit 1 receives the input of light L emitted by the measuring target object O. The light L includes the thermal radiant light LR and the light LP. The branch unit 1 includes a spectroscopic unit having a bandpass filter or the like, and branches and outputs the light L into a first optical component L1, a second optical component L2, and a third optical component L3. Further, the branch unit 1 includes an input optical system including a lens or the like for receiving the input of light L and an output optical system including a lens and the like for outputting the first optical component L1, the second optical component L2, and the third optical component L3 to the image sensor 2.

The first optical component L1 is an optical component having a first wavelength, and has a narrow spectral shape with a full width at half maximum with the first wavelength as a peak. The second optical component L2 is an optical component having a second wavelength longer than the first wavelength, and has a narrow spectral shape with a full width at half maximum with the second wavelength as a peak. The third optical component L3 is an optical component having a third wavelength shorter than the first wavelength or longer than the second wavelength, and has a narrow spectral shape with a full width at half maximum with the third wavelength as a peak. In this embodiment, the third wavelength is set to be a wavelength shorter than the first wavelength. It is preferable that the full width at half maximum of each of the first optical component L1, the second optical component L2, and the third optical component L3 is sufficiently narrower than the wavelength interval with adjacent optical components.

For example, the image sensor 2 is configured by arranging a plurality of unit light receiving elements such as a Charge-Coupled Device (CCD) in a two-dimensional manner. Each unit light receiving element corresponds to each unit pixel in the pixel region of the image sensor 2. The image sensor 2 has a first pixel region 2a which corresponds to a first light receiving unit and is configured by a plurality of unit pixels, a second pixel region 2b which corresponds to a second light receiving unit and is configured by a plurality of unit pixels, and a third pixel region 2c which corresponds to a third light receiving unit and is configured by a plurality of unit pixels. The first pixel region 2a, the second pixel region 2b, and the third pixel region 2c are configured by different pixel regions of the image sensor 2.

The first pixel region 2a receives the first optical component L1 and outputs a current signal S1 having a current value corresponding to the received light intensity thereof. The second pixel region 2b receives the second optical component L2 and outputs a current signal S2 having a current value corresponding to the received light intensity thereof. The third pixel region 2c receives the third optical component L3 and outputs a current signal S3 having a current value corresponding to the received light intensity thereof.

The processing unit 3 includes an arithmetic unit and a storage unit. The arithmetic unit performs various arithmetic processing for realizing the functions of the processing unit 3, and is configured by, for example, a Central Processing Unit (CPU) or an Field-Programmable Gate Array (FPGA), or both a CPU and an FPGA. The storage unit includes a part configured by, for example, a Read Only Memory (ROM) in which various programs, data and the like which are used for the arithmetic unit to perform the arithmetic processing are stored. Further, the storage unit includes a part configured by, for example, a Random Access Memory (RAM) which is used to store the work space when the arithmetic unit performs arithmetic processing, the result of the arithmetic processing of the arithmetic unit and the like.

The processing unit 3 includes an input unit which receives inputs of the current signals S1, S2, and S3. Further, the processing unit 3 may include an output unit which outputs a signal including various kinds of information such as the measured temperature and a display unit which displays characters, symbols and the like for notifying an operator of the temperature measurement system 10 of various kinds of information. The processing unit 3 can be realized by, for example, a personal computer.

On the basis of the current values of the current signals S1, S2, and S3, the processing unit 3 obtains the intensity of the first optical component L1 received by the first pixel region 2a, the intensity of the second optical component L2 received by the second pixel region 2b, and the intensity of the third optical component L3 received by the third pixel region 2c. Each intensity may be obtained by using a predetermined arithmetic expression or may be obtained by using the table data stored in the storage unit.

The processing unit 3 corrects the obtained intensity of the first optical component L1 and the obtained intensity of the second optical component L2 on the basis of the obtained intensity of the third optical component L3 and calculates the temperature of the measuring target object O, specifically, the temperature of the molten pool M on the basis of the corrected intensity of the first optical component L1 and the corrected intensity of the second optical component L2 by using the two-color method. Accordingly, the temperature is measured.

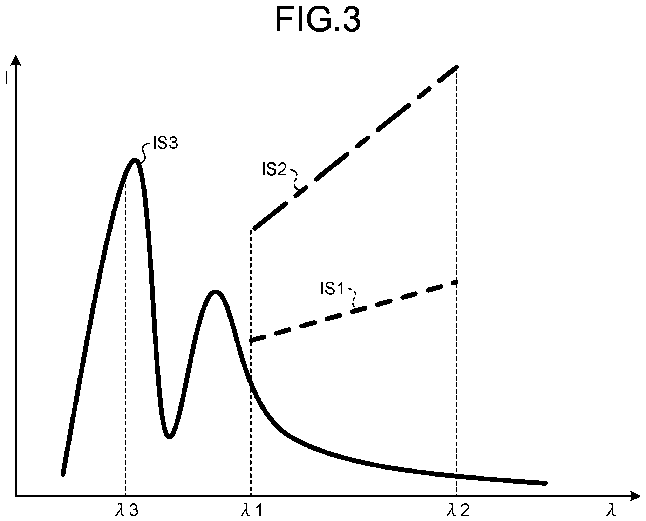

Hereinafter, a specific description will be given. FIG. 3 is a diagram illustrating an intensity spectrum of light emitted by the measuring target object. A wavelength λ1 is a first wavelength, a wavelength λ2 is a second wavelength, and a wavelength λ3 is a third wavelength. An intensity spectrum IS1 is a part of an intensity spectrum of radiation light at a certain first temperature of the molten pool M. An intensity spectrum IS2 is a part of an intensity spectrum of radiation light at a second temperature higher than the first temperature of the molten pool M. An intensity spectrum IS3 is the intensity spectrum of the light LP emitted by the plume P. The wavelength λ3 is a value at or near the peak wavelength of the intensity spectrum IS3.

As illustrated in the drawing, the intensity spectrum IS2 at a higher temperature has a larger slope with respect to a wavelength than that of the intensity spectrum IS1, but the slope with respect to a wavelength depends only on the temperature of the molten pool M. Therefore, the processing unit 3 can measure the temperature of the molten pool M of the measuring target object O on the basis of the wavelength λ1 and the intensity of the first optical component L1 and the wavelength λ2 and the intensity of the second optical component L2 by using the two-color method.

However, in this embodiment, as illustrated in the drawing, the intensity spectrum IS3 of the light LP has a certain degree of intensity at both the wavelengths λ1 and λ2, which becomes an error factor. Thus, the accuracy of the temperature measurement of the molten pool M of the measuring target object O using the two-color method is reduced.

Therefore, in this embodiment, the processing unit 3 calculates the temperature of the measuring target object O, specifically, the temperature of the molten pool M on the basis of the intensity of the first optical component L1 and the intensity of the second optical component L2 which are corrected on the basis of the intensity of the third optical component L3 by using the two-color method. Accordingly, the effect of the light LP which is an error factor is reduced, and the decrease in the accuracy of the temperature measurement is suppressed.

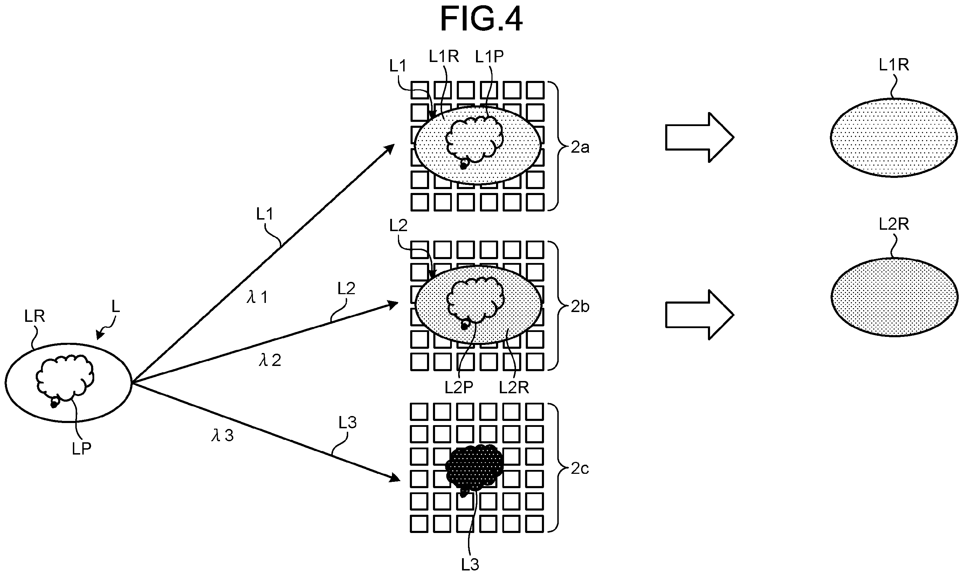

A specific example of the correction method will be described. FIG. 4 is a diagram illustrating an example of the correction method. First, the light L from the measuring target object O includes the thermal radiant light LR and the light LP which is an error factor light. The light L is branched into the first optical component L1, the second optical component L2, and the third optical component L3 by the branch unit 1, which are received in the first pixel region 2a, the second pixel region 2b, and the third pixel region 2c, respectively. The received first optical component L1 has an intensity of I1 and contains a thermal radiant optical component L1R and an optical component L1P which is an error factor optical component. The received second optical component L2 has an intensity of I2 and contains a thermal radiant optical component L2R and an optical component L2P which is an error factor optical component. The third optical component L3 is formed of only the light emitting component of almost plume. In this way, in order that the third optical component L3 is formed of only the light emitting component (error factor optical component) of the plume, the third wavelength λ3 is preferably shorter by 50 nm or more than the first wavelength λ1.

Here, unlike the intensity spectrum of the thermal radiant light LR, the intensity spectrum IS3 of the light LP has a substantially constant spectral shape regardless of the temperature or the like. Then, the intensity of the optical component L1P contained in the first optical component L1 can be estimated from the intensity of the third optical component L3. Similarly, the intensity of the optical component L2P contained in the second optical component L2 can be estimated from the intensity of the third optical component L3.

For example, when the intensity of the third optical component L3 is I3, the estimated value of the intensity of the optical component L1P contained in the first optical component L1 is represented by a×I3. Further, the estimated value of the intensity of the optical component L2P contained in the second optical component L2 is represented by b×I3. Herein, a and b are proportional coefficients. The proportional coefficients a and b can be obtained in advance in a preliminary experiment or the like and are stored in, for example, the storage unit of the processing unit 3.

Then, corrected intensities I1cor and I2cor of the first optical component L1 and the second optical component L2 are represented by following equations (1) and (2), respectively. The intensities I1cor and I2cor can be considered as the intensities of the thermal radiant optical components L1R and L2R, respectively.

$$\text{I1cor} = \text{I1} - \text{a×I3} \qquad\qquad\qquad (1)$$

$$I2cor = I2 - b \times I3 \qquad\qquad (2)$$

In this way, from the intensity I3 of the third optical component L3, the processing unit 3 obtains the intensity of the error factor optical component (optical component L1P) at the first wavelength λ1 and obtains the intensity of the error factor optical component (optical component L2P) at the second wavelength λ2. Then, the intensities are subtracted from the intensity I1 of the first optical component L1 and the intensity I2 of the second optical component L2, respectively, so as to obtain the corrected intensities I1cor and I2cor of the first optical component L1 and the second optical component L2. Then, the temperature of the molten pool M of the measuring target object O is calculated on the basis of the intensities I1cor and I2cor by using the two-color method, so that the decrease in the accuracy of temperature measurement can be suppressed.

Incidentally, a method of obtaining the intensities of the optical component L1P and the optical component L2P from the intensity I3 of the third optical component L3 is not limited to the method using the proportional coefficients as described above. For example, a table data may be which shows the correspondence with the intensity I3 and each intensity of the optical component L1P and the optical component L2P. Such table data can be created in advance in a preliminary experiment or the like and is stored in, for example, the storage unit of the processing unit 3.

As described above, according to the temperature measurement system 10, it is possible to reduce the effect of the light LP which is an error factor and suppress the decrease in the accuracy of temperature measurement using the two-color method.

In the temperature measurement system 10, the first pixel region 2a, the second pixel region 2b, and the third pixel region 2c are configured by different pixel regions in the single image sensor 2. Therefore, the first pixel region 2a, the second pixel region 2b, and the third pixel region 2c can be brought close to each other. As a result, in the branch unit 1, the first optical component L1, the second optical component L2, and the third optical component L3 can be output to the corresponding pixel regions of the image sensor 2 by the common output optical system. Further, even if the common output optical system is used in this way, a difference in aberration of the output optical system between the first optical component L1, the second optical component L2, and the third optical component L3 can be reduced.

(Second embodiment)

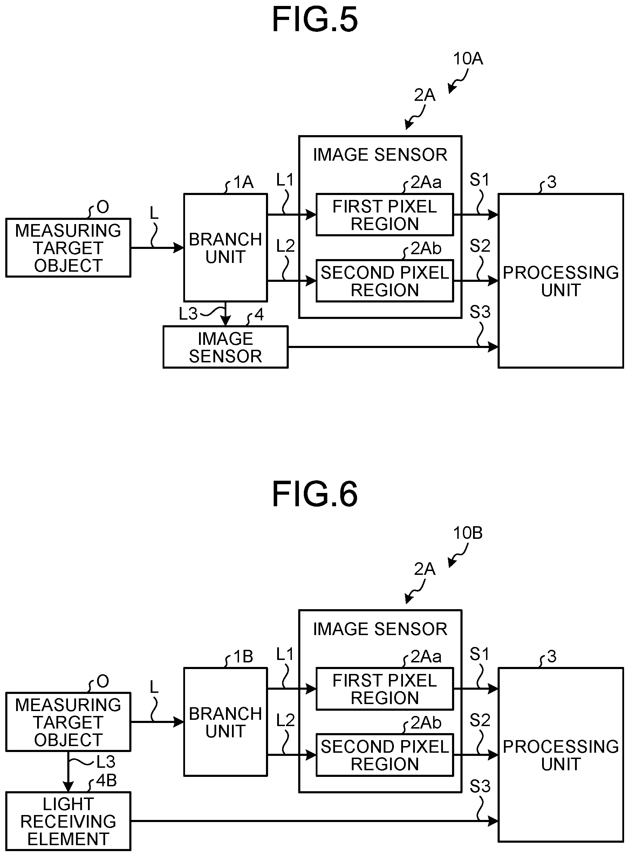

FIG. 5 is a schematic diagram illustrating a schematic configuration of a temperature measurement system according to a second embodiment. A temperature measurement system 10A includes a branch unit 1A, image sensors 2A and 4, and a processing unit 3. FIG. 5 also illustrates the case of measuring the temperature of the measuring target object O.

Similarly to the branch unit 1 in the first embodiment, the branch unit 1A receives the input of the light L emitted by the measuring target object O. The branch unit 1A includes a spectroscopic unit having a bandpass filter or the like, and branches and outputs the light L into the first optical component L1, the second optical component L2, and the third optical component L3. Further, the branch unit 1A includes an input optical system for receiving the input of light L, an output optical system for outputting the first optical component L1 and the second optical component L2 to the image sensor 2A, an output optical system for outputting the third optical component L3 to the image sensor 4.

The image sensor 2A is configured by arranging a plurality of unit light receiving elements in a two-dimensional manner. The image sensor 2A has a first pixel region 2Aa which corresponds to the first light receiving unit and is configured by a plurality of unit pixels and a second pixel region 2Ab which corresponds to the second light receiving unit and is configured by a plurality of unit pixels. The first pixel region 2Aa and the second pixel region 2Ab are configured by different pixel regions of the image sensor 2A. On the other hand, the image sensor 4 is configured by arranging a plurality of unit light receiving elements in a two-dimensional manner and corresponds to the third light receiving unit.

The first pixel region 2Aa receives the first optical component L1 and outputs the current signal S1 having a current value corresponding to the received light intensity thereof. The second pixel region 2Ab receives the second optical component L2 and outputs the current signal S2 having a current value corresponding to the received light intensity thereof. The image sensor 4 receives the third optical component L3 and outputs the current signal S3 having a current value corresponding to the received light intensity thereof.

Similar to the first embodiment, on the basis of the input current values of the current signals S1, S2, and S3, the processing unit 3 obtains the intensity of the first optical component L1 received by the first pixel region 2Aa, the intensity of the second optical component L2 received by the second pixel region 2Ab, and the intensity of the third optical component L3 received by the image sensor 4. Further, the processing unit 3 corrects the obtained intensity of the first optical component L1 and the obtained intensity of the second optical component L2 on the basis of the obtained intensity of the third optical component L3. Then, the temperature of the measuring target object O is calculated on the basis of the corrected intensity of the first optical component L1 and the corrected intensity of the second optical component L2 by using the two-color method. For example, from the intensity I3 of the third optical component L3, the processing unit 3 obtains the intensity of the error factor optical component at the first wavelength λ1 and obtains the intensity of the error factor optical component at the second wavelength λ2. Then, the intensities are subtracted from the intensity of the first optical component L1 and the intensity of the second optical component L2, respectively, so as to obtain the corrected intensities of the first optical component L1 and the second optical component L2, and the temperature of the molten pool M of the measuring target object O is calculated by using the two-color method.

According to the temperature measurement system 10A, as in the temperature measurement system 10 according to the first embodiment, the effect of the light emission of the plume which is an error factor can be reduced, and the decrease in the accuracy of the temperature measurement using the two-color method can be suppressed.

In the temperature measurement system 10A, the first pixel region 2Aa and the second pixel region 2Ab are configured by different pixel regions in the single image sensor 2A, and the image sensor 4 is a separate body from the image sensor 2A. Therefore, the pixel region of the image sensor 2A can be allocated to the first pixel region 2Aa and the second pixel region 2Ab, and thus the area of each pixel region can be widened.

(Third embodiment)

FIG. 6 is a schematic diagram illustrating a schematic configuration of a temperature measurement system according to a third embodiment. A temperature measurement system 10B includes a branch unit 1B, the image sensor 2A, a light receiving element 4B, and the processing unit 3. FIG. 6 also illustrates the case of measuring the temperature of the measuring target object O.

The branch unit 1B receives the input of the light L emitted by the measuring target object O. The branch unit 1B includes a spectroscopic unit having a bandpass filter or the like, and branches and outputs the light L into the first optical component L1 and the second optical component L2. Further, the branch unit 1B includes an input optical system for receiving the input of light L and an output optical system for outputting the first optical component L1 and the second optical component L2 to the image sensor 2A.

The image sensor 2A has the first pixel region 2Aa and the second pixel region 2Ab. On the other hand, the light receiving element 4B corresponds to the third light receiving unit and is a separate body from the image sensor 2A. The light receiving element 4B may be configured by arranging a plurality of unit light receiving elements in a two-dimensional manner or may be a single light receiving element such as a photodiode. The light receiving element 4B is configured to receive only the third optical component L3 from the measuring target object O. The light receiving element 4B may be provided with a bandpass filter which transmits the third optical component L3 and does not transmit the first optical component L1 and the second optical component L2 in front of a light receiving surface or may be arranged such that the third optical component L3 is input, and the first optical component L1 and the second optical component L2 are not input in the light L emitted by the measuring target object O.

The first pixel region 2Aa receives the first optical component L1 and outputs the current signal S1 having a current value corresponding to the received light intensity thereof. The second pixel region 2Ab receives the second optical component L2 and outputs the current signal S2 having a current value corresponding to the received light intensity thereof. The light receiving element 4B receives the third optical component L3 and outputs the current signal S3 having a current value corresponding to the received light intensity thereof.

Similar to the first and second embodiments, on the basis of the input current values of the current signals S1, S2, and S3, the processing unit 3 obtains the intensity of the first optical component L1 received by the first pixel region 2Aa, the intensity of the second optical component L2 received by the second pixel region 2Ab, and the intensity of the third optical component L3 received by the light receiving element 4B. Further, the processing unit 3 corrects the obtained intensity of the first optical component L1 and the obtained intensity of the second optical component L2 on the basis of the obtained intensity of the third optical component L3. Then, the temperature of the measuring target object O is calculated on the basis of the corrected intensity of the first optical component L1 and the corrected intensity of the second optical component L2 by using the two-color method. For example, from the intensity I3 of the third optical component L3, the processing unit 3 obtains the intensity of the error factor optical component at the first wavelength λ1 and obtains the intensity of the error factor optical component at the second wavelength λ2. Then, the intensities are subtracted from the intensity of the first optical component L1 and the intensity of the second optical component L2, respectively, so as to obtain the corrected intensities of the first optical component L1 and the second optical component L2, and the temperature of the molten pool M of the measuring target object O is calculated by using the two-color method.

According to the temperature measurement system 10B, as in the temperature measurement systems 10 and 10A according to the first and second embodiments, the effect of the light emission of the plume which is an error factor can be reduced, and the decrease in the accuracy of the temperature measurement using the two-color method can be suppressed.

(Fourth embodiment)

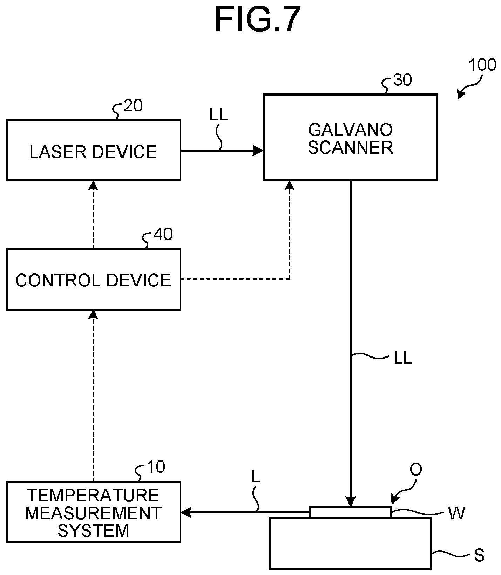

FIG. 7 is a schematic diagram illustrating a schematic configuration of a laser processing device according to a fourth embodiment. A laser processing device 100 includes the temperature measurement system 10 according to the first embodiment, a laser device 20, a galvano scanner 30, and a control device 40. The laser processing device 100 can laser-process the workpiece W which is the measuring target object O supported by a stage S.

The laser device 20 outputs a laser beam LL having various characteristics capable of laser-processing the workpiece W by irradiating the workpiece W. These various characteristics include, for example, the characteristics of the wavelength and intensity of the laser beam LL. In a case where the laser beam LL is optical pulse, for example, a pulse width and a pulse period are included. The laser device 20 can be configured by using a conventionally known processing laser device such as a fiber laser, a YAG laser, a disk laser, or a semiconductor laser.

The galvano scanner 30 includes, for example, two mirrors and a motor which rotationally drives each mirror around a predetermined axis. While receiving the laser beam LL and reflecting the laser beam sequentially by each mirror, the galvano scanner 30 can move the irradiation position of the laser beam LL on the surface of the workpiece W by controlling the rotation angle of each mirror and sweep the laser beam LL with respect to the workpiece W. Incidentally, the galvano scanner 30 of this embodiment has a built-in condensing optical system and can condense the laser beam LL on the surface of the workpiece W. A delivery fiber or a spatial optical system can be used to propagate the laser beam LL from the laser device 20 to the galvano scanner 30. Incidentally, as a unit for relatively moving the irradiation position of the laser beam LL on the surface of the workpiece W, a unit for moving the stage S on a plane can also be applied. Therefore, the relative movement of the irradiation position can be realized by driving the galvano scanner 30 and moving the stage S, or the combination of both.

The temperature measurement system 10 receives the input of the light L emitted by the measuring target object O and measures the temperature of the measuring target object O. The temperature measurement system 10 outputs an electric signal including the information of the measured temperature to the control device 40 as a measurement signal as indicated by a broken line arrow.

The control device 40 includes, for example, a microcomputer and a signal input/output interface unit. The measurement signal is received from the temperature measurement system 10, and the control signal is output to each of the laser device 20 and the galvano scanner 30 as indicated by the broken line arrow. The control device 40 can perform arithmetic processing on the basis of the information of the temperature from the temperature measurement system 10 and can control the output of the laser device 20 and control the irradiation position or the sweep speed of the laser beam LL by the galvano scanner 30. Incidentally, in a case where the relative movement of the irradiation position is executed by moving the stage S, the control device 40 may perform the control of moving the stage S.

The laser processing device 100 can perform more suitable laser processing on the basis of the temperature measurement with excellent accuracy by the temperature measurement system 10.

The temperature measurement system 10 in the laser processing device 100 may be replaced with the temperature measurement system 10A or 10B according to another embodiment. Further, the galvano scanner 30 may be replaced with a roboter for laser processing having a built-in optical fiber as a device having the same function. Incidentally, the roboter is also called a robot arm.

Incidentally, the first wavelength λ1, the second wavelength λ2, and the third wavelength λ3 are preferably in a range of 300 nm to 1000 nm. Within the range of 300 nm to 1000 nm, a wavelength range with high light receiving sensitivity can be used when a commercially available CCD is used as the image sensor 2, 2A, 4, and the like. Further, in a case where the measuring target object O is made of copper or a copper alloy as in this embodiment, the third wavelength λ3 is preferably in a range of 500 nm to 550 nm in which the intensity of the light LP is high.

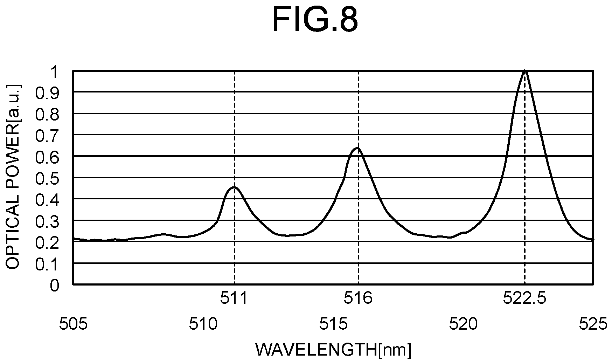

FIG. 8 is a diagram illustrating an example of the intensity spectrum of the emission of plume and illustrates the intensity spectrum in a case where the measuring target object O contains copper. As illustrated in the drawing, this intensity spectrum has copper-specific peaks at wavelengths of approximately 511 nm, approximately 516 nm, and approximately 522.5 nm. Incidentally, the intensity on a vertical axis is standardized with the peak value of approximately 522.5 nm. In this regard, the third wavelength can be 511 nm ± 2 nm, 516 nm ± 2 nm, or 522.5 nm ± 2 nm as a value at or near the peak wavelength of the intensity spectrum. Accordingly, the estimation accuracy of the error factor optical component at the first wavelength and the second wavelength used for the temperature measurement by the two-color method is improved, so that the decrease in the accuracy of the temperature measurement is further suppressed.

Further, according to the above embodiment, even when the intensity of the optical component of the light LP which is an error factor light at the first wavelength and the second wavelength used for the temperature measurement by the two-color method is relatively strong, the decrease in the accuracy of the temperature measurement by the optical component can be suppressed. This means that the wavelength range that can be selected as the first wavelength and the second wavelength can be widened as compared with the method of selecting the wavelength having almost no optical component of the light LP as the first wavelength and the second wavelength. As a result, for example, the wavelength interval between the first wavelength and the second wavelength can be widened, so that the accuracy of the temperature measurement by the two-color method is improved. Further, since the wavelength range that can be selected as the first wavelength and the second wavelength can be widened, the first wavelength and the second wavelength are selected from the wavelength bandwidth in which the accuracy of the temperature measurement using the two-color method can be improved further. The wavelength bandwidth in which the accuracy of the temperature measurement using the two-color method can be further improved is, for example, a wavelength bandwidth in which a slope is large with respect to the wavelength of the intensity spectrum of the thermal radiant light.

In the above embodiment, the third wavelength is shorter than the first wavelength, but for example, in a case where the peak wavelength of the intensity spectrum of the error factor light is longer than the second wavelength, the third wavelength may be set to be longer than the second wavelength. In this case, the third wavelength is preferably a wavelength which is 50 nm or more longer than the second wavelength.

In the above embodiment, the error factor light is the emission of the plume, but the invention is not limited to this. The present invention can also be applied to a case where the temperature of the measuring target object which radiates heat and emits other error factor light due to phenomena other than the thermal radiation is measured by using the two-color method.

In the above embodiment, the measuring target object is a workpiece made of copper or a copper alloy, but the invention is not limited to this. The measuring target object may be a workpiece made of aluminum or an aluminum alloy or may be a workpiece made of another metal material. Further, the present invention can be applied as long as the workpiece is a measuring target object which radiates heat and emits light due to phenomena other than the thermal radiation during the thermal radiation in addition to the workpiece made of a metal material.

In the above embodiment, the correction is performed on the basis of the intensity of the third optical component. However, the intensity of a fourth optical component having a wavelength different from that of the third component may be further measured, and the correction may be performed on the basis of the intensities of the third optical component and the fourth optical component.

The present invention is not limited by the above-described embodiments. The present invention also includes those configured by appropriately combining the components of each of the above-described embodiments. In addition, further effects and modifications can be easily derived by those skilled in the art. Therefore, the broader aspect of the present invention is not limited to the above-described embodiments, and various modifications can be made.

Industrial Applicability

As described above, the present invention is suitable for application to temperature measurement. Reference Signs List

1, 1A, 1B BRANCH UNIT
2, 2A IMAGE SENSOR
2a, 2Aa FIRST PIXEL REGION
2b, 2Ab SECOND PIXEL REGION
2c THIRD PIXEL REGION
3 PROCESSING UNIT
4 IMAGE SENSOR
4B LIGHT RECEIVING ELEMENT
10, 10A, 10B TEMPERATURE MEASUREMENT SYSTEM 20 LASER DEVICE
30 GALVANO SCANNER
40 CONTROL DEVICE
100 LASER PROCESSING DEVICE
IS1, IS2, IS3 INTENSITY SPECTRUM
L LIGHT
L1 FIRST OPTICAL COMPONENT
L1P, L2P OPTICAL COMPONENT
L1R, L2R THERMAL RADIANT OPTICAL COMPONENT
L2 SECOND OPTICAL COMPONENT
L3 THIRD OPTICAL COMPONENT
LP LIGHT
LR THERMAL RADIANT LIGHT
M MOLTEN POOL
O MEASURING TARGET OBJECT
P PLUME

S1, S2, S3 CURRENT SIGNAL
W WORKPIECE

**Claims**

1.  A temperature measurement system comprising:

    a first light receiving unit that receives a first optical component having a first wavelength in light emitted by a measuring target object radiating heat;
    a second light receiving unit that receives a second optical component having a second wavelength longer than the first wavelength in the light;
    a third light receiving unit that receives a third optical component having a third wavelength shorter than the first wavelength or longer than the second wavelength in the light; and
    a processing unit that corrects an intensity of the first optical component received by the first light receiving unit and an intensity of the second optical component received by the second light receiving unit on a basis of an intensity of the third optical component received by the third light receiving unit and calculates a temperature of the measuring target object on a basis of the corrected intensity of the first optical component and the corrected intensity of the second optical component by using a two-color method.

2.  The temperature measurement system according to claim 1, wherein the first wavelength, the second wavelength, and the third wavelength are in a range of 300 nm to 1000 nm.

3.  The temperature measurement system according to claim 1 or 2, wherein the first light receiving unit, the second light receiving unit, and the third light receiving unit are configured by different pixel regions of a single image sensor.

4.  The temperature measurement system according to claim 1 or 2, wherein the first light receiving unit and the second light receiving unit are configured by different pixel regions of a single image sensor, and the third light receiving unit is configured by a light receiving element separate from the image sensor.

5.  The temperature measurement system according to any one of claims 1 to 4, wherein the third wavelength is a wavelength shorter than the first wavelength by 50 nm or more.

6.  The temperature measurement system according to any one of claims 1 to 4, wherein the third wavelength is a wavelength longer than the second wavelength by 50 nm or more.

7.  The temperature measurement system according to any one of claims 1 to 6, wherein the processing unit obtains intensities of an error factor optical component emitted due to phenomena other than thermal radiation in the light at the first wavelength and the second wavelength from the intensity of the third optical component received by the third light receiving unit and performs the correction by subtracting the intensities from the intensity of the received first optical component and the intensity of the received second optical component, respectively.

8.  The temperature measurement system according to any one of claims 1 to 7, wherein the measuring target object contains copper or a copper alloy.

9.  The temperature measurement system according to claim 8, wherein the third wavelength is in a range of 500 nm to 550 nm.

10. The temperature measurement system according to claim 9, wherein the third wavelength is 511 nm $\pm$ 2 nm, 516 nm $\pm$ 2 nm, or 522.5 nm $\pm$ 2 nm.

11. The temperature measurement system according to any one of claims 1 to 7, wherein the measuring target object contains aluminum or an aluminum alloy.

12. The temperature measurement system according to any one of claims 1 to 11, wherein the measuring target object radiates heat by being irradiated with a laser beam.

13. A laser processing device comprising:

the temperature measurement system according to any one of claims 1 to 12; and
a laser device that outputs a laser beam to irradiate the measuring target object.

14. A temperature measurement method comprising:

receiving a first optical component having a first wavelength in light emitted by a measuring target object radiating heat;
receiving a second optical component having a second wavelength longer than the first wavelength in the light;
receiving a third optical component having a third wavelength shorter than the first wavelength or longer than the second wavelength in the light; and
correcting an intensity of the received first optical component and an intensity of the received second optical component on a basis of an intensity of the received third optical component and calculating a temperature of the measuring target object on a basis of the corrected intensity of the first optical component and the corrected intensity of the second optical component by using a two-color method.

15. The temperature measurement method according to claim 14, wherein intensities of an error factor optical component emitted due to phenomena other than thermal radiation in the light at the first wavelength and the second wavelength are obtained from the intensity of the received third optical component, and the correction is performed by subtracting the intensities from the intensity of the received first optical component and the intensity of the received second optical component, respectively.

# FIG.1

# FIG.2

# FIG.3

# FIG.4

EP 3 869 171 A1

# FIG.5

```
                                                    10A
                                              2A
                                                  IMAGE SENSOR
                          1A    L1                    2Aa      S1        3
   O                 BRANCH            FIRST PIXEL
MEASURING       L    UNIT             REGION                        PROCESSING
TARGET                         L2                     2Ab      S2   UNIT
OBJECT                                SECOND PIXEL
                                      REGION
                     L3    4                                  S3
                    IMAGE
                    SENSOR
```

# FIG.6

```
                                                    10B
                                              2A
                                                  IMAGE SENSOR
                          1B    L1                    2Aa      S1        3
   O                 BRANCH            FIRST PIXEL
MEASURING       L    UNIT             REGION                        PROCESSING
TARGET                         L2                     2Ab      S2   UNIT
OBJECT                                SECOND PIXEL
          L3                          REGION
          4B                                                  S3
LIGHT
RECEIVING
ELEMENT
```

# FIG.7

# FIG.8

## INTERNATIONAL SEARCH REPORT

| International application No. |
|---|
| PCT/JP2019/040515 |

### A. CLASSIFICATION OF SUBJECT MATTER
Int.Cl. G01J5/60(2006.01)i

According to International Patent Classification (IPC) or to both national classification and IPC

### B. FIELDS SEARCHED
Minimum documentation searched (classification system followed by classification symbols)
Int.Cl. G01J5/00-5/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | EP 2887031 A1 (LAYTEC AG) 24 June 2015, claims 1, 9, paragraphs [0021], [0034]-[0061], fig. 1 | 1-2, 5-11, 14-15 |
| Y | (Family: none) | 3-4, 12-13 |
| Y | JP 2008-268106 A (MITSUI OPTRONICS KK) 06 November 2008, paragraphs [0051], [0056]-[0057], [0072]-[0109], fig. 1, 4 (Family: none) | 3-4 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December 2019 (05.12.2019) | 17 December 2019 (17.12.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/040515

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-152360 A (MATSUSHITA ELECTRIC INDUSTRIAL CO., LTD.) 11 June 1996, paragraphs [0019]-[0041], fig. 1-6 (Family: none) | 3-4 |
| Y | JP 2003-245789 A (HAMAMATSU PHOTONICS K.K.) 02 September 2003, paragraphs [0015]-[0018] (Family: none) | 12-13 |
| Y | JP 2015-208763 A (HAMAMATSU PHOTONICS K.K.) 24 November 2015, paragraphs [0023]-[0025] & WO 2015/163141 A1 | 12-13 |
| P, X | JP 2019-20370 A (NIPPON STEEL & SUMITOMO METAL CORPORATION) 07 February 2019, paragraphs [0016]-[0111], fig. 1-12 (Family: none) | 1-2, 5, 14 |
| A | JP 2014-234981 A (TAKUMA CO., LTD.) 15 December 2014 (Family: none) | 1-15 |
| A | Microfilm of the specification and drawings annexed to the request of Japanese Utility Model Application No. 73999/1989 (Laid-open No. 14437/1991) (SUMITOMO METAL INDUSTRIES, LTD.) 14 February 1991 (Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1638473 A

- JP 2007192579 A